# EUROPEAN PATENT APPLICATION

(11) **EP 1 481 921 A1**
(43) Date of publication of application: **01.12.2004**
(21) Application number: 02710875.2
(22) Date of filing: 28.01.2002
(51) Int. Cl.: B65D 81/34, B65D 81/32, A47J 36/28, B65D 51/28

(54) **AUTOTHERMIC PACKAGING**

(71) Applicant: GENESCA ROMEU, Isidro, 25006 Lleida (ES)
(72) Inventor: GENESCA ROMEU, Isidro, 25006 Lleida (ES)
(74) Representative: Manresa Val, Manuel
(86) International application number: PCT/ES2002/000036
(87) International publication number: WO 2003/064283

(57) **Abstract**

The invention relates to autothermic packaging comprising a container (1) for a food product and a first compartment (5) containing a first substance which can react with a second substance that is contained in a second compartment (6) or which can change phases when exposed to conditions in said second compartment (6). Both of the aforementioned compartments (5, 6) abut one another by means of the mouth thereof and are separated by means of a sheet (7) which can be broken from the outside using penetration means (8). At least one heat-conducting wall (9) is shared by the container (1) and the first compartment (5). Moreover, said heat-conducting wall (9) comprises a band (10) which is disposed next to the mouth thereof and the container (1) comprises an external heat-insulating wall (11) which is connected to a base member (39) having a band (12) close to a peripheral edge. The aforementioned peripheral flanged bands (10, 12) abut one another, thereby forming a hermetic, resistant seam by means of crimping.

## Description

### Scope of the Invention

This invention relates to an autothermic packaging of the type comprising a receptacle for a food product and first and second compartments for one or more substances that can undergo a chemical or physical transformation via a heat exchange with respect to said receptacle, and means for voluntarily producing said chemical or physical transformation, causing said food product to be heated or cooled.

### Background to the Invention

For a long time it has been known to produce packagings for food products that incorporate in the actual packaging a receptacle for a food product or a drink and means for mixing two substances that can react, either exothermically or endothermically, and therefore produce a heat exchange with the container for heating or cooling the food product contained therein.

In this sense, patent ES-A-423862 (SATO) applied for in 1974 can be mentioned, which describes several embodiments of a packaging for food products such as coffee, soup, sake and similar products, or foods such as noodles, stews and the like, in a receptacle thereof, said receptacle being separated from two other compartments that hold the chemical agents or reagents which are held separate from one another. The objective of said invention concerns the autothermic condition of the receptacle and conditions for simple construction and safe operation.

For its part, patent FR-A-2587608, from 1986, relates to a container for automatically heating or cooling drinks or food via an exothermic or endothermic reaction of two adjacent substances, and describes a structure consisting of a membrane that separates two compartments holding said substances, said membrane having special features so that it is easy to break. Also various reagents are described such as magnesium chloride/water, potassium tiocyanate and potassium tiocyanate and urea in ammonia.

Patent US-A-5255812 describes a lid for a tin or drink, said lid containing in one compartment a chemical compound capable of releasing the heat to be mixed with a catalyst liquid held in another compartment. Both compartments are separated by a sheet. A sharp element is joined to a convex flexible wall opposite said sheet. Pressure applied from outside said flexible wall causes the sharp element to move, breaking the sheet and causing the catalyst liquid to pass into the compartment holding the chemical compound. The compartment where the chemical reaction takes place forms a concavity inside the tin, so that the product to be heated is in contact with part of the external surface of said compartment so as to improve the heat transfer.

Patents ES-A-2055662 and WO-93/17928, both from the same group and in the name of the same applicant, provide a mixed container comprising, on the one hand, a container and a receptacle for a soluble powder extract and water, respectively, and, on the other hand, two compartments for chemical reagents that produce an exothermic reaction. Both the container and the receptacle and the two compartments are separated by respective breakable sheets, and means are provided for voluntarily breaking either sheet from the outside so as to mix said extract in the water, thus obtaining a freshly prepared product, and bring the said reagents into contact. Said means for breaking the sheets are of the type comprising a sharp element joined to a convex flexible wall. The container for the soluble extract, together with the corresponding sheet and breaking means, constitute a subunit that is snap fitted to the mouth of the water container, so that once the food mixture is formed and heated, said subunit can be removed so that the container can be used like a glass.

Patent US-A-6079405 describes a packaging for mixing and heating *in situ* two components that make up a food product. For the food components, a water receptacle is provided with an opening closed off by a container for a soluble food powder. The receptacle and container are separated by a breakable sheet. A sharp element is associated with a device for lineal movement, bellow-sealed and provided with a safety ring, which enables the sharp element to be moved to break said sheet. The sharp element is surrounded by a tubular element, which also penetrates the sheet. In one embodiment, this tubular element communicates with the outside and is used to supply therethrough the food product obtained, possibly with the addition of a feeding bottle teat attached to an outer end of the tubular element. In the lower area of the water receptacle there are compartments for corresponding heating reagents separated by a sheet, and means for breaking said sheet, of the type comprising a sharp element joined to a convex flexible wall. A cylindrical outside wall of the water receptacle extends beyond the convex flexible wall, defining with its edge a seat for a sealing sheet that is part of the breaking means.

In these autothermic packagings of the prior art, it is vital that there is a connection seam between the food product receptacle and the compartments intended to hold the chemical products, so as to avoid possible infiltrations or contamination of the said food product. It is also important to prevent the reaction products from escaping to the outside. A connection seam between the food product receptacle and the reaction compartments must be particularly resistant when the reaction is exothermic, as in this case, pressure of approximately 2 to 3 kg/cm² and temperatures up to 140°C can be reached in the reaction compartment.

One problem that, in general, the prior art autothermic packagings present is that the afore-mentioned seam is relatively weak and does not sufficiently guarantee the airtightness of the food product receptacle. The problem is due to the difficulty in forming tight resistant connections between different materials that make up the walls of the various parts of the packaging. Although it is convenient for the outside walls of the packaging to be heat insulative, in order to maintain the maximum heat or coolness of the food product once it has been heated or cooled by the reaction produced between the chemical substances, it is convenient for at least one wall common to the packaging and the compartment where the chemical reaction takes place, to be heat conductive, so as to facilitate the transfer of heat between the reaction and the food product. To this end, a plastic, innocuous material, suitable for food applications, is used as a heat insulating material for the outside walls of the packaging, and a metallic material in the form of a fine sheet is used as a heat conducting material.

These two materials cannot be joined together by thermal or ultrasonic welding, and normally special glues are used that do not provide a sufficiently secure join. Also in the prior art, an attempt has been made to compress or trap a strip, next to a perimetral edge of the metallic sheet forming the reaction compartment, between two areas of the plastics material of the outside walls of the packaging that are welded together by ultrasound. This join is fairly resistant in a cooling process. However, when the inside pressure and temperature increase, as in the case of an exothermic reaction, the fixation base of both materials becomes deformed and escape channels are created through which pressure from reheated steam produced by the reaction is released or, which is worse, through which the food product receptacle is contaminated.

An objective of this invention is to provide an autothermic packaging of the type described above having a seam between the outside wall of the food product receptacle and a wall of the compartment where the chemical reaction takes place that is sufficiently resistant and safe.

Another objective of this invention is to provide a versatile and disposable autothermic packaging, that can be used as a glass or as a feeding bottle, where the food product is composed of one single component or two components that can be mixed by the user, with said component(s) being sealed in an airtight manner in the packaging before use.

Another objective of this invention is to provide a versatile and partially reusable autothermic packaging that can be used as a glass or feeding bottle, where the food product is prepared and/or introduced into the packaging by the user before use.

### Exposition of the invention

The afore-mentioned objectives are reached, according to this invention, by providing an autothermic packaging comprising a receptacle for a food product and a first compartment containing a first substance that can react with a second substance contained in a second compartment, or undergo a phase change by being exposed to conditions present in said second compartment. Both the first and the second compartment back onto each other and are separated by a breakable sheet that can be broken from the outside by penetration means to produce the mixture and chemical reaction between said first and second substances including heat exchange or a phase change of said first substance including heat exchange. At least one heat conducting wall is common to the receptacle and the first compartment in order to facilitate the said heat exchange therebetween.

Said common heat conducting wall forms a concavity inside a space limited by a heat insulating wall of the food product receptacle, whereby said first compartment is surrounded by the receptacle and with the outer surface of the heat conducting wall in contact with the food product. The heat conducting wall has at its opening a strip next to a perimetral edge and the receptacle has said heat insulating wall connected to a base element also provided with a strip next to a perimetral edge. As explained below, said base element can be integral with the heat insulating wall or a separate part joined to the heat insulating wall by suitable means. At any event, the material used both for the heat insulating wall and said base element is the same and is a plastics material, such as polypropylene, optionally with filler materials such as talc, silicon, wood dust or nut shells, while the material used for the heat conducting wall is a metallic, laminar material, such as an aluminium alloy.

The afore-mentioned perimetral strips of the heat conducting wall and the base element are connected by placing them back to back and mutually flanging them, thus forming, by seaming, an airtight and mechanically resistant seam that prevents contamination of said food product, contained in the receptacle, by the substance or substances contained in the first and second compartments. For greater safety, between the perimetral strips that back onto one another and are mutually flanged there is preferably an elastic seal or adhesive glue. For its part, the second compartment has a heat insulating wall, preferably made from the same plastics material as the receptacle wall, which defines a perimetral seat onto which a strip is attached, for example by means of an adhesive or heat welding, next to a perimetral edge of said breakable sheet. The heat insulating wall of the second compartment also has an end perimetral flange backed onto which, attached by welding (ultrasound or heat welding, such as a laser), there is a perimetral flange of said base element connected to the receptacle. The said perimetral strip of the breakable sheet rests on its free side on a part of the perimetral strip of the heat conducting wall.

Therefore, the airtightness between the first compartment, which contains the first chemical substance, and the receptacle containing the food substance, is guaranteed by said flanged and seamed mechanical join, which optionally can be reinforced with an elastic seal or an adhesive material, while the airtightness between the second compartment and the outside is guaranteed by said welding of the flanges of the heat insulating walls of the receptacle and the second compartment.

### Brief explanation of the drawings

These and other advantages and features will be more evident from the following detailed description of some embodiments, which are provided merely as an example, with reference to the attached drawings, in which:
Fig. 1 is a sectioned side view of the autothermic packaging of this invention according to a basic embodiment that can be used as a disposable glass or cup;
Fig. 2 is detail II of Fig. 1 enlarged, showing an airtight seam between different materials;
Fig. 3 is a sectioned side view of the autothermic packaging of this invention according to another embodiment that includes means for preparing a food product from two components, and which can be used as a disposable glass or cup;
Fig. 4 is a detail of Fig. 3 enlarged, showing how the perforation means work;
Fig. 5 is a sectioned side view of an autothermic packaging similar to that shown in Fig. 3 that can also be used as a disposable feeding bottle;
Figs. 6 and 7 are detailed side views showing the assembly of the teat in the packaging of Fig. 5;
Fig. 8 is a sectioned side view of the autothermic packaging of this invention according to another embodiment that can be used as a partially reusable feeding bottle or as a reusable glass or cup;
Fig. 9 is detail IX of Fig. 8 enlarged, showing an airtight seal between different materials and the dismountable connection of the reusable part of the packaging.

### Detailed description of some preferred embodiments

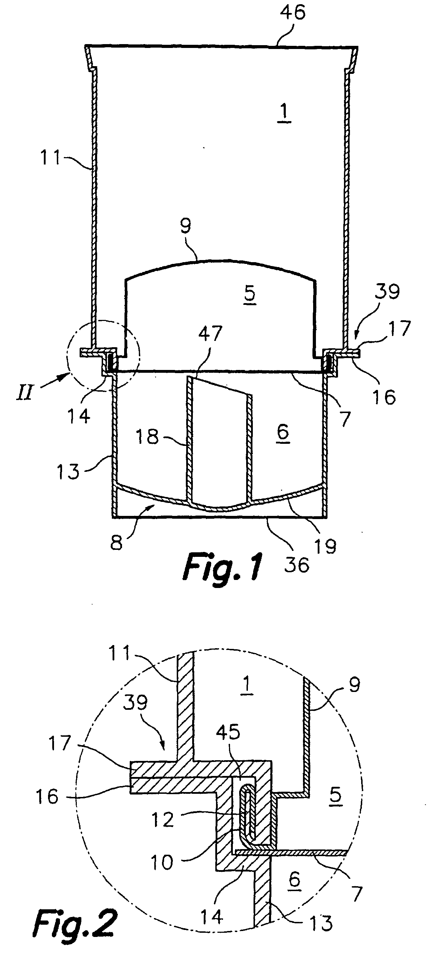

First of all, reference is made to Fig. 1 showing a basic embodiment of the autothermic packaging of this invention.

The autothermic packaging comprises a receptacle 1 for a food product, such as a drink or a meal in a liquid base. In the lower part of receptacle 1 there is a first compartment 5 containing a first substance that can react with a second substance contained in a second compartment 6, or undergo a phase change when exposed to conditions present in said second compartment 6, as explained below. The said first and second compartments 5, 6 back onto one another at their openings and they are separated by a breakable sheet 7 (e.g. a sheet of plasticized aluminium) which can be broken from the outside by penetration means 8 to produce a mixture and subsequent chemical reaction between said first and second substances, including heat exchange. Receptacle 1 and first compartment 5 have a common heat conducting wall 9 to facilitate the heat exchange therebetween. Said heat conducting wall 9 forms a concavity inside a space limited by an outside heat insulating wall 11 of receptacle 1, whereby first compartment 5 is surrounded by receptacle 1 and the food product is in contact with said heat conducting wall 9, which has a strip 10 formed next to its perimetral edge. Said heat insulating wall 11 of receptacle 1 is connected to a base element 39 (see also Fig. 2), which is made from the same heat insulating material and also has a strip 12 next to its perimetral edge. The two aforementioned perimetral strips 10, 12 of heat conducting wall 9 and heat insulating wall 11 back onto each other and are mutually flanged forming, through seaming, an airtight and mechanically resistant seam that prevents the substances contained in first and second compartments 5, 6 from leaking into receptacle 1 and, consequently, which also prevents contamination of said food product contained in said receptacle.

This seam is an essential feature of this invention and is common to all the illustrated embodiments. In order to reinforce said seam even further, optionally an elastic seal is incorporated (not shown) or adhesive glue is included between perimetral strips 10, 12 that back onto one another and are mutually flanged.

Second compartment 6 has a heat insulating wall 13 that defines a perimetral seat 14, onto which said breakable sheet 7 is attached by means of a strip next to its perimetral edge. Said heat insulating wall 13 includes an end perimetral flange 16, backed onto which, attached by welding, there is a perimetral flange 17 of said base element 39, which in turn is connected to receptacle 1. The free face of said perimetral strip of breakable sheet 7 rests on a part of perimetral strip 10 of heat conducting wall 9. Although the pressure inside compartment 5, produced by the reaction, can escape into an annular space 45 intended to house flanged seam 10, 12, said pressure is retained by the welded join between flanges 16, 17 so that no chemical substances can leak outside either.

In order to facilitate the breakage of breaking sheet 7 from the outside, said penetration means 8 are provided which are of the conventional type and comprise a penetrating element 18 joined to a convex flexible wall 19 opposite breakable sheet 7. Said penetrating element 18 extends as far as the proximity of the breakable sheet 7. Said convex flexible wall 19 can be deformed by pressure from outside so as to move penetrating element 18 and break said breakable sheet 7. A feature of this invention is that penetrating element 18 is shaped like a hollow tubular body and has a bevelled penetrating end 47.

In the embodiment shown in Fig. 1, heat insulating wall 11 is integral with base element 39 and the food product contained in receptacle 1 is sealed in an airtight manner, for example, by a removable sealing sheet 46. Once the food product has been heated or cooled by causing the breakage of breakable sheet 7 using penetration means 8, and once seal 46 has been removed, receptacle 1 can be used as a conventional disposable glass or cup. The side wall 13 of second compartment 6 extends beyond convex flexible wall 19 and defines an opening closed by a sheet 36, such as plasticized paper, which is joined along its periphery to the edge of said opening and which acts as an access seal for said convex flexible wall 19.

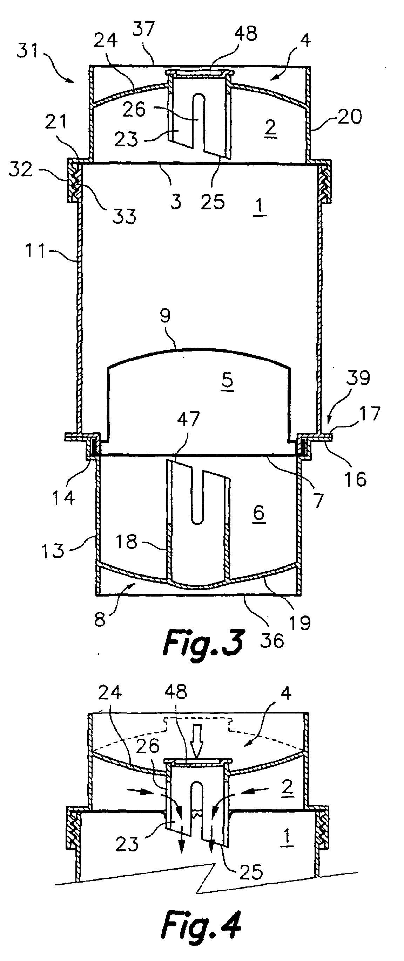

Fig. 3 shows another embodiment of the packaging of the invention in which heat insulating wall 11 is also integral with base element 39, although here the packaging includes a container 2 for one component, usually in powder or granulated form, that can be mixed with the food product held in receptacle 1 to make, for example, coffee, an infusion, a milk shake or the like. Said container 2 and receptacle 1 back onto one another and they are separated by a sheet 3 that can be broken from the outside by penetration means 4 to cause a mixture of said mixable component and the food product. These penetration means are of the aforementioned type and comprise a penetrating element 23 joined to a convex flexible wall 24, opposite breakable sheet 3, with said penetrating element 23 extending as far as the proximity of breakable sheet 3. Also with these penetration means 4, penetrating element 23 is shaped like a hollow tubular body and has a bevelled penetrating element 25. However, here the said hollow tubular body of penetrating element 23 communicates with the outside of container 2 via convex flexible wall 24 so that it forms a conduit or tube for supplying said mixture of the food product and the mixable component. Removable lid means have been provided, such as for example a stopper 48, for opening and closing the outside opening of said conduit. The hollow tubular body of penetrating element 23 also has some openings 26 in its side wall, in the longitudinal direction thereof, to form a passage for the mixable component from container 2 to receptacle 1 and for the mixture of the food product and the mixable component from receptacle 1 to the hollow tubular body of penetrating element 23. Fig. 4 shows flexible wall 24 of penetration means 4 in a bent position and shows how openings 26 operate to provide said passage for the mixable component from container 2 to receptacle 1. Breakable sheet 3, like breakable sheet 7, is preferably made from a metallized paper.

Container 2 has a wall 20, preferably made from the same heat insulating material as wall 11, which defines a perimetral seat 21 to which a strip is attached next to a perimetral edge of said breakable sheet 3. Therefore, container 2, breakable sheet 3 and penetration means 4 constitute a subunit 31 joined to receptacle 1 by releasable connection means. In this way, said subunit 31 acts as an airtight lid for receptacle 1 when said connection means are attached, and receptacle 1 is open at the top, acting as a glass, when said connection means are released and subunit 1 is withdrawn. In this embodiment of Fig. 3, said releasable connection means comprise complementary screw threads 32, 33, arranged respectively on the cylindrical ends of subunit 31 and heat insulating wall 11 of receptacle 1. Said side wall 20 of container 2 extends beyond convex flexible wall 24 and defines an opening closed by a sheet 37, such as plasticized paper, joined along its periphery to the edge of said opening and which acts as an access seal for said convex flexible wall 24.

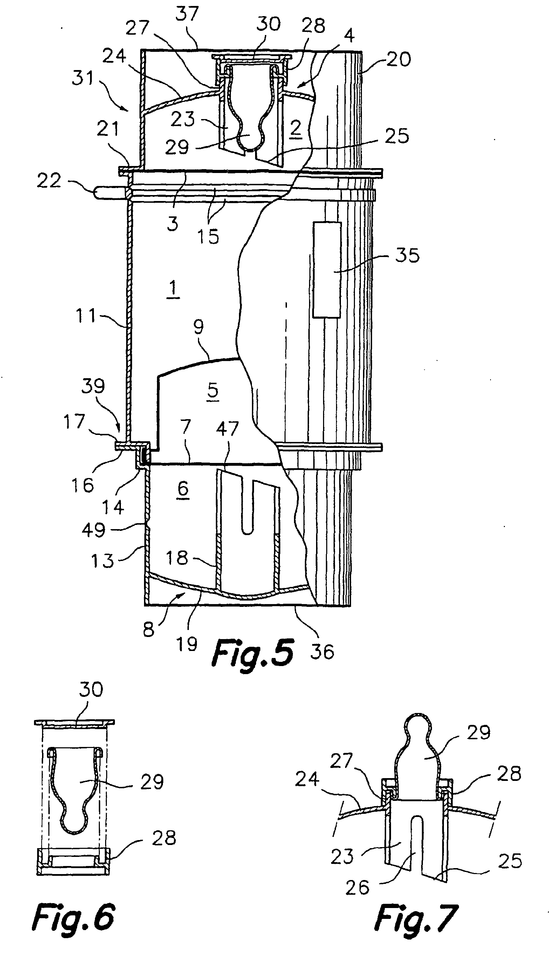

The embodiment in Fig. 5 is exactly the same as the embodiment in Fig. 3, except that here said hollow tubular body of penetrating element 23, which is preferably cylindrical, has an end 27 that slightly protrudes from convex flexible wall 24, where a ring 28 is snap fitted (see also Figs. 6 and 7) that provides a retaining ring support for a teat 29 which, in a first position of ring 28 (Fig. 5) prior to use, is housed towards the inside of the hollow tubular body and, in a second position of ring 28 (Fig. 7) the position of use, protrudes towards the outside from said end 27 of the hollow tubular body. A lid 30, that can be snap fitted to ring 28, makes it possible to seal tubular body 23 and protect said teat 29 in said first position prior to use. Therefore, the package as a whole constitutes a single-use, that is, disposable feeding bottle.

However here, as in the embodiment in Fig. 3, releasable connection means have been provided to separate subunit 31 from receptacle 1 so that the packaging can also be used as a glass or cup. In this embodiment in Fig. 5, said releasable connection means comprise a tearable strip 34 attached along weakening lines 15 around the perimeter of heat insulating wall 11 of receptacle 1, next to an upper edge thereof. Said tearable strip 34 ends in a tearing tab 22, which when pulled outwards enables said weakening lines 15 to be torn and subunit 31 to be separated from receptacle 1. It is obvious that the features shown in the various embodiments can be combined together, so that, for example, the disposable feeding bottle in Fig. 5 could use the releasable threaded connection means of the disposable glass in Fig. 3, etc.

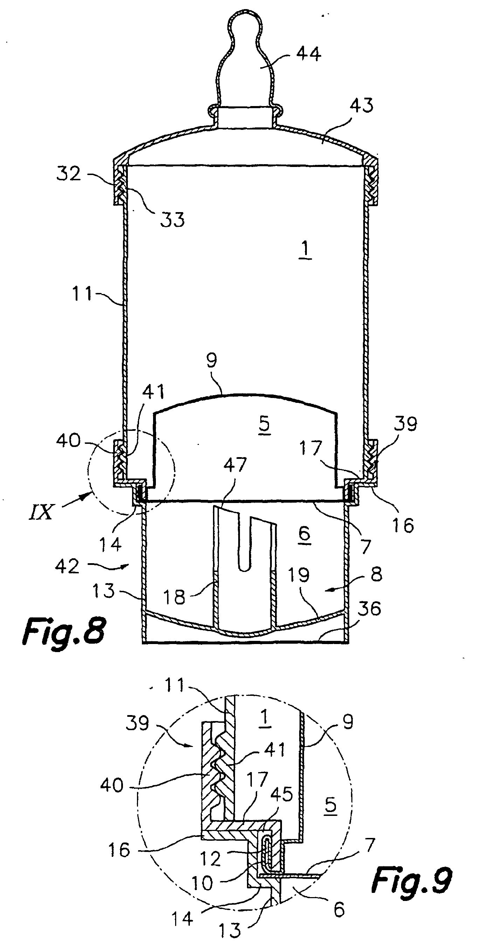

Figs. 8 and 9 show yet another embodiment of this invention, the most important feature being that it comprises releasable connection means between heat insulating wall 11 and base element 39, which enable receptacle 1 to be separated from a subunit 42 made up of first and second compartments 5, 6, penetration means 8 and base element 39. Thanks to this arrangement, receptacle 1 can be reused (in this example, as a feeding bottle), while said subunit 42 is disposable and can be replaced with a new one that can be acquired as a consumable element. Preferably, and as shown in greater detail in Fig. 9, said releasable connection means comprise complementary screw threads 40, 41, arranged respectively on cylindrical ends of base element 39 of subunit 42 and heat insulating wall 11 of receptacle 1. Consequently, base element 39 adopts the shape of an annular element with said strip 12 joined by flanging to strip 10 of wall 9 of compartment 5 and flange 17 joined by welding to flange 16 of wall 13 of second compartment 6, said cylindrical end bearing screw thread 40 being derived from said flange 17.

At the other end of receptacle 1, that is, the top end, a lid 43 is screwed on, which is provided with a retaining ring support for a teat 44 in order to supply the food product. However, in this embodiment, the food product has been prepared previously and introduced into receptacle 1 by a user before being heated. This has the advantage that each user can prepare to her liking the exact food product that their baby needs in the different stages of their development without having to throw the feeding bottle away after each feed. Therefore, lid 43 and teat 44, as well as receptacle 1, can be reused.

Some features are described below which, although they have been illustrated in the embodiment in Fig. 5, can be applied to any of the illustrated embodiments. Therefore, the autothermic packaging of this invention shown in Fig. 5 includes a thermometric device 35 that is flat, like a band, and attached to the outside of heat insulating wall 11 of receptacle 1. This thermometric device 35 shows the changes in temperature by altering its colour tone so as to provide a simple indication of the temperature of the food product contained in receptacle 1. On the other hand, a safety valve is provided on an outside wall of second compartment 5, made up of a specifically weakened area 49, which can give way if internal pressure exceeds 5 kg/cm². This provides a safety device against a possible small explosion that could occur if compartments 5 and/or 6 were suddenly broken because of excessive pressure produced during the reaction between the chemical substances.

As mentioned above, the packaging of this invention can heat or cool the food product contained in receptacle 1.

For the heating function, the preferred procedure, from the point of view of both economics and efficiency, involves providing as a first substance, contained in first compartment 5, a calcium oxide (CaO) and as the second substance, contained in second compartment 6, water (H₂O), which react exothermically producing a sufficient amount of energy to heat the food product in receptacle 1. Preferably, the calcium oxide is in the form of a pressure compacted granulate, with a grain size of approximately 6 to approximately 9 mm average diameter and optionally with a catalyst mixed therein to delay the reaction activity.

For the cooling function, said first substance contained in the first compartment is a low boiling point liquid such as liquid ether, while conditions present in second compartment 6 include a depression of approximately 4 mm of Hg. The ether changes endothermically from a liquid to vapour phase when exposed to said conditions, absorbing a sufficient amount of heat to cool the food product in receptacle 1. Preferably, inside second compartment 6, there is a membrane made from an absorbent material (not shown), such as dehydrated charcoal, for absorbing the ether steam so as to delay the speed of the phase change.

## Claims

1. Autothermic packaging of the type comprising a receptacle (1) for a food product, and a first compartment (5) containing a first substance that can react with a second substance contained in a second compartment (6) or undergo a phase change when exposed to conditions present in said second compartment (6), with both first and second compartments (5, 6) backing onto each other at their openings and being separated by a breakable sheet (7) that can be broken from the outside by penetration means (8) to produce a mixture and chemical reaction between said first and second substances including heat exchange or a phase change of said first substance including heat exchange, with at least one heat conducting wall (9) being common to receptacle (1) and first compartment (5) in order to facilitate the said heat exchange therebetween, **characterised in that** said heat conducting wall (9) has a strip (10) next to a perimetral edge of its opening and receptacle (1) has an outside heat insulating wall (11) connected to a base element (39) also provided with a strip (12) next to a perimetral edge, with said perimetral strips (10, 12) being connected by placing them back to back and mutually flanging them, thus forming, by seaming, an airtight and mechanically resistant seam that prevents contamination of said food product, contained in receptacle (1) by the substance(s) contained in first and second compartments (5, 6).

2. Packaging according to claim 1, **characterised in that** it includes an elastic seal or adhesive glue between perimetral strips (10, 12) that back onto one another and are mutually flanged.

3. Packaging according to claim 1, **characterised in that** heat conducting wall (9) forms a concavity inside a space limited by said heat insulating wall (11) whereby first compartment (5) is surrounded by receptacle (1).

4. Packaging according to claim 3, **characterised in that** second compartment (6) has a heat insulating wall (13) that defines a perimetral seat (14) onto which a strip is attached next to a perimetral edge of said breakable sheet (7), and an end perimetral flange (16), backing onto which, attached by welding, there is a perimetral flange (17) of said base element (39) connected to receptacle (1), leaving said perimetral strip of breakable sheet (7) resting on a part of perimetral strip (10) of heat conducting wall (9).

5. Packaging according to claim 4, **characterised in that** said penetration means (8) comprise a penetrating element (18) joined to a convex flexible wall (19) opposite breakable sheet (7), with said penetrating element (18) extending as far as the proximity of breakable sheet (7), it being possible that said convex flexible wall (19) becomes deformed by pressure from the outside so as to move penetrating element (18) and break said breakable sheet (7).

6. Packaging according to claim 5, **characterised in that** heat insulating wall (11) is integral with base element (39) and **in that** it includes a container (2) for a component that can be mixed with said food product, with said container (2) and receptacle (1) backing onto one another and being separated by a sheet (3) that can be broken from the outside by penetration means (4) to produce a mixture of said mixable component and the food product.

7. Packaging according to claim 6, **characterised in that** container (2) has a wall (20) that defines a perimetral seat (21) on which there is attached a strip next to a perimetral edge of said breakable sheet (3), and a penetrating element (23) joined to a convex flexible wall (24) opposite breakable sheet (3), with said penetrating element (23) extending as far as the proximity of breakable sheet (3), it being possible that said convex flexible wall (24) becomes deformed with pressure from the outside so as to move penetrating element (23) and break said breakable sheet (3), with penetrating element (23) and convex flexible wall (24) constituting said penetration means (4).

8. Packaging according to claim 7, **characterised in that** penetrating element (23) comprises a hollow tubular body and a bevelled penetrating end (25).

9. Packaging according to claim 8, **characterised in that** said hollow tubular body of penetrating element (23) communicates with the outside of container (2) by means of convex flexible wall (24) so that it forms a conduit for supplying said mixture of the food product and the mixable component, removable lid means being provided for the outside opening of said conduit.

10. Packaging according to claim 9, **characterised in that** said hollow tubular body of penetrating element (23) has at least one opening (26) in its side wall, along the longitudinal direction thereof, for forming a passage for the mixable component from container (2) to receptacle (1) and for the mixture of the food product and the mixable component from receptacle (1) to the hollow tubular body.

11. Packaging according to claim 10, **characterised in that** said hollow tubular body of penetrating element (23) is cylindrical and has an end (27) that slightly protrudes from convex flexible wall (24), where a ring (28) is snap fitted which provides a retaining ring support for a teat (29) which, in a first position of ring (28), prior to use, is housed towards the inside of the hollow tubular body and, in a second position of ring (28), the position of use, protrudes towards the outside from said end (27) of the hollow tubular body, with the package as a whole constituting a single-use feeding bottle.

12. Packaging according to claim 11, **characterised in that** it comprises a lid (30) that can be snap fitted to ring (28) to seal the hollow tubular body and protect said teat (29) in said first position prior to use.

13. Packaging according to claim 6, **characterised in that** said container (2), breakable sheet (3) and penetration means (4) make up a subunit (31) joined to receptacle (1) by releasable connection means, so that said subunit (31) acts as an airtight seal for receptacle (1) when said connection means are attached, and receptacle (1) is open at the top, acting as a glass, when said connection means are released and subunit (31) withdrawn.

14. Packaging according to claim 13, **characterised in that** said releasable connection means comprise complementary screw threads (32, 33), arranged respectively on cylindrical ends of subunit (31) and heat insulating wall (11) of receptacle (1), with a seal being provided.

15. Packaging according to claim 13, **characterised in that** said releasable connection means comprise a tearable strip (34) attached along weakening lines (15) around the perimeter of heat insulating wall (11) of receptacle (1), next to an upper edge thereof, with said tearable strip (34) ending in a tearing tab (22), which when pulled outwards enables said weakening lines (15) to be torn and subunit (31) to be separated from receptacle (1).

16. Packaging according to claim 5 **characterised in that** said releasable connection means between a heat insulating wall (11) and a base element (39), therefore the receptacle (1) being reusable whilst the subunit (42) made of the first and second compartments (5,6), penetration means (8) and a base element (39) being of single use.

17. Packaging according to claim 16, **characterised in that** said releasable connection means comprise complementary screw threads (40, 41) arranged respectively on cylindrical ends of base element (39) of subunit (42) and heat insulating wall (11) of receptacle (1).

18. Packaging according to claim 17, **characterised in that** it includes a lid (43) that can be screwed onto the top end of receptacle (1), said lid (43) being provided with a retaining ring support for a teat (44) in order to supply the food product, which has been previously introduced into receptacle (1) by a user, through said teat (44), with lid (43) and teat (44) also being reusable.

19. Packaging according to claim 1, **characterised in that** it includes a flat thermometric device (35), like a band, attached to the outside of heat insulating wall (11) of receptacle (1), with said thermometric device (35) showing temperature changes by altering its colour tone.

20. Packaging according to claim 1, **characterised in that** an outer wall of the second compartment (6) includes a safety valve made up of a specifically weakened area (49) that can give way if internal pressure exceeds 5 kg/cm².

21. Packaging according to claim 5, **characterised in that** side wall(s) of second compartment (6) extend beyond convex flexible wall (19) and define an opening closed by a sheet (36), such as a plasticized paper, joined along its periphery to the edge of said opening and which acts as an access seal for said convex flexible wall (19).

22. Packaging according to claim 6, **characterised in that** side wall(s) of the container (2) extend beyond convex flexible wall (24) and define an opening closed by a sheet (37), such as a plasticized paper, joined along its periphery to the edge of said opening and which acts as an access seal for said convex flexible wall (24).

23. Packaging according to claim 5, **characterised in that** said penetrating element (18) comprises a hollow tubular body and a bevelled penetrating end (47).

24. Packaging according to claim 1 or 6, **characterised in that** said breakable sheet (7, 3) is made up of metallized paper.

25. Packaging according to claim 1, **characterised in that** the first substance is calcium oxide (CaO) and the second substance is water (H₂O), which react exothermically thus heating the food product in receptacle (1).

26. Packaging according to claim 25, **characterised in that** the calcium oxide is in a granulated form pressure compacted from a powder material, or obtained by grinding, with a grain size of approximately 6 to approximately 9 mm average diameter in order to delay the reaction activity.

27. Packaging according to claim 26, **characterised in that** said pressure compacted granulate also contains a catalyst mixed therein.

28. Packaging according to claim 1, **characterised in that** said first substance is a low boiling point liquid and said conditions present in said second compartment (6) comprise a depression of approximately 4 mm of Hg, with the ether changing endothermically from a liquid to vapour phase when exposed to said conditions, thus cooling the food product in receptacle (1).

29. Packaging according to claim 28, **characterised in that** inside second compartment (6), there is a membrane made from an absorbent material, such as dehydrated charcoal, for absorbing the ether steam so as to delay the speed of the phase change.
